# EUROPEAN PATENT APPLICATION

(11) **EP 2 093 103 A1**
(43) Date of publication of application: **26.08.2009**
(21) Application number: 09001810.2
(22) Date of filing: 10.02.2009
(51) Int. Cl.: B60P 3/34

(54) **Recreational vehicle with variable volume house cell**

(30) Priority: 21.02.2008 IT TO20080130
(71) Applicant: Cattabriga, Simona, 10043 Orbassano (TO) (IT)
(72) Inventor: Biancotto, Massimo, 10043 Orbassano (TO) (IT)
(74) Representative: Aprà, Mario

(57) **Abstract**

Recreational vehicle (10) with variable volume house cell (11), including a bodywork (12), characterized by a dome (16) that can move vertically with reference to the bodywork (12) between a lower position, in which said dome (16) is substantially inside the overall dimensions of the vehicle (10), when it is in the traffic, and a lifted up position, in which the dome itself creates an increased inner volume of the house cell (11) of the vehicle, so that said dome (16), when lifted up, provides a room like a mansard inside the house cell.

## Description

This invention relates to a recreational vehicle with variable volume house cell.

In this description the expression "recreational vehicle" is indicating a transport means as campers, motor caravans, caravans or similar, get ready in order to allow the occupants besides to be transported, even to stay.

A "recreational vehicle" as caravan or camper is furnished with an engine and with an independent guiding system and includes, besides, a chassis typical of any trucks on which a house cell is placed.

This type of recreational vehicle can be provided as below :
a) with a mansard, in this case the house cell consists in an outer element, linked during the assembling to a tractor.
   The peculiarity of this vehicle is the extension of the cell above the driver compartment, where it provides an area called "mansard" that allows to put further beds inside it;
b) semi-integral vehicle (even called cab-over profile vehicle), in which the house cell is placed on a cruiser chassis, that, instead of the mansard, is aerodynamically connected with the volume of the driver compartment through a front fixed and formed fairing where, generally, are collocated short wall units and, sometimes, a space for TV. This type of vehicle is lacking of one double-bed that is generally placed in the mansard not present in this type of vehicle;
c) motorhome, in which the house cell is in one bodywork with the tractor. In this case only the engine is taken from an actual vehicle. The house cell is designed in order to use in the best way the available space; even the driver compartment is not divided from the inner space, and suitable for living when the vehicle is not moving.

A recreational vehicle called roulotte consists of an independent house cell, that has to be cowed by another vehicle.

All the well-known recreational vehicles can be equipped with an elevated hard top as a standard or modified by the manufacturer, or with a "bellows top", a roof, generally by plastic reinforced, that can be raised up from the inside remaining hinged on one side, or completely raised up, with the walls made by the same flexible material as a camping tent.

However there is the need to increase the house capacity of recreational vehicles, particularly in terms of beds number.

This need has to take into consideration the overall dimensions of the vehicle both during the stop and during it is moving.

Some recreational vehicles have been proposed, in which part of the house cell can be stretched by side when the user wants but only during the stop, and moved again inside the vehicle silhouette when it starts moving on the road (for example, see US 6,224,126 B1).

This solution, however, doesn't allow to have much more space, in particular to arrange other beds, and it is in contrast with the limited spaces at disposal in the parking areas (for example in those areas assigned for the parking of the recreational vehicles or similar).

The present invention, starting as from knowing such drawbacks, wishes to find a remedy therefore.

One object of this invention is to provide a recreational vehicle that allows, to increase, according to user will, during the parking, the capability in term of space of the house cell, using simple and efficient means.

Another object of this invention is provide a recreational vehicle that allows, to increase, according to user will, the number of beds inside the house cell, using simple and efficient means. One more object of this invention is to provide a recreational vehicle in which the capability of the house cell in term of space can be increased without a reduction of comfort in relation with its insulation and impermeability.

Having in mind these objects, this invention wants to provide a recreational vehicle with variable volume house cell, whose main characteristic is set out in claim 1.

Some more advantageous characteristics are described in the dependent claims.

The claims mentioned above are meant to be here wholly reported. This invention will be explained by the following detailed description, with reference to the exemplifying drawing attached, in which :
- fig. 1 is a longitudinal section view of the recreational vehicle with the variable volume house cell according to an exemplifying embodiment of the invention, in which the house cell is represented with the smallest inner space;
- fig. 2 is a view similar to the figure 1, in which the house cell is represented with the largest inner space;

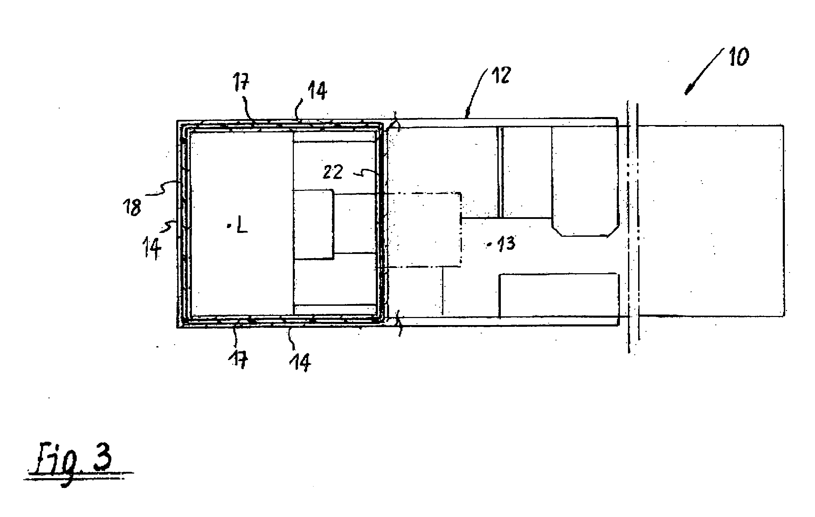

- fig. 3 is a section view according to the III-III line of fig. 2;
- fig. 4 is a schematic longitudinal section view, in larger scale, that represents the rear bodywork of the side house cell in the smallest configuration and with some broken parts for more detail;
- fig. 5 is a bottom view in direction of the arrow V of fig. 4;
- fig. 6 is a view similar to the figure 4, in which the house cell is represented with the largest inner space;

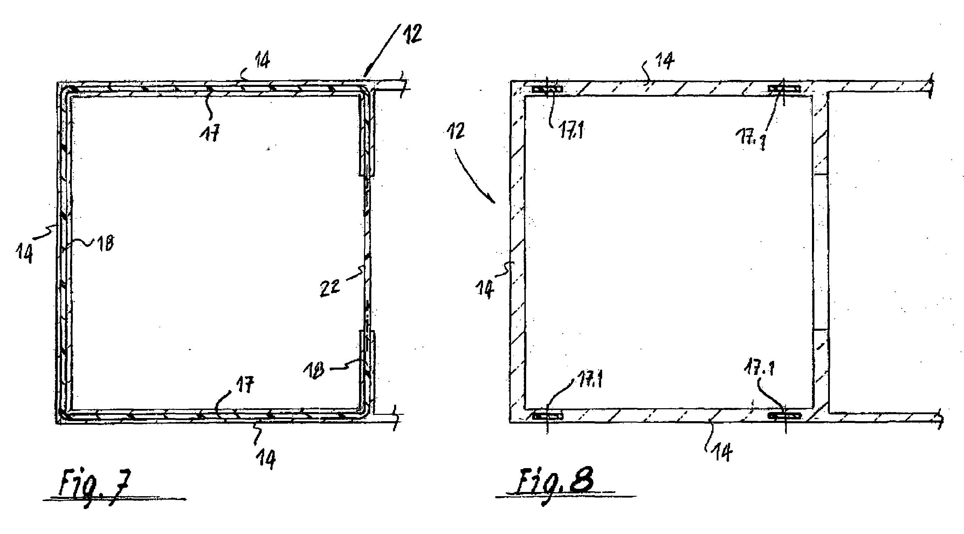

- fig. 7 is a section view according to the VII-VII line of fig. 6;
- fig. 8 is a section view according to the VIII-VIII line of fig. 6;
- fig. 9 is a detailed view of the higher part of fig. 4, that represents the house cell in the smallest inner space configuration and in which a floating bulkhead is shown in the vertical position;
- fig. 10 is a front view in direction of the arrow X of fig. 9;
- fig. 11 is similar to fig. 9, but in which the floating bulkhead is represented in horizontal position;
- fig. 12 is a front view in direction of the arrow XII of fig. 11;
- fig. 13 is a schematic detailed view of the higher part of fig. 6, in which the house cell is represented in the largest inner space configuration;
- fig. 14 is a perspective view and in a different scale, of one part of a moving dome of the house cell according to the said embodiment of the invention, the dome being represented alone;
- fig. 15 is a detailed view, in larger scale, of the part XV in fig. 13.

With reference to the drawing, item 10 is indicating a recreational vehicle, for example the mansard type, with the variable volume house cell according to the present embodiment of the invention.

As well-known in the construction of recreational vehicles, the vehicle 10 consists of an house cell 11 that includes a bodywork 12, composed by a floor 13, side surfaces 14 and a plane roof 15. In the rear part of the house cell 11, it's possible to have a zone called "dinette", in which we can usually find a table and two opposite divans, convertible in bed.

The bodywork 12 consists of sandwich panels, comprising, for example, a smooth or corrugated outer layer made of aluminium (or plastic with fibreglass), a thermal insulating layer, usually polystyrene, used to insulate thermally the inner part of the vehicle from the outside, while the last layer is provided in plywood lined with plastic materials and/or textiles. Inside the bodywork, there are uprights and traverses made of wood to strengthen the bodywork.

According to this invention, at least one part of the roof 15 can be provided with a moving dome 16 vertically in relation with the bodywork 12 from a lower position, in which the dome 16 is substantially inside the silhouette of the vehicle 10 for the street circulation, and a lifted up position that provide the largest inner space configuration of the house cell 11 of the vehicle.

In the example illustrated, said dome 16 is located in correspondence of the "dinette" .

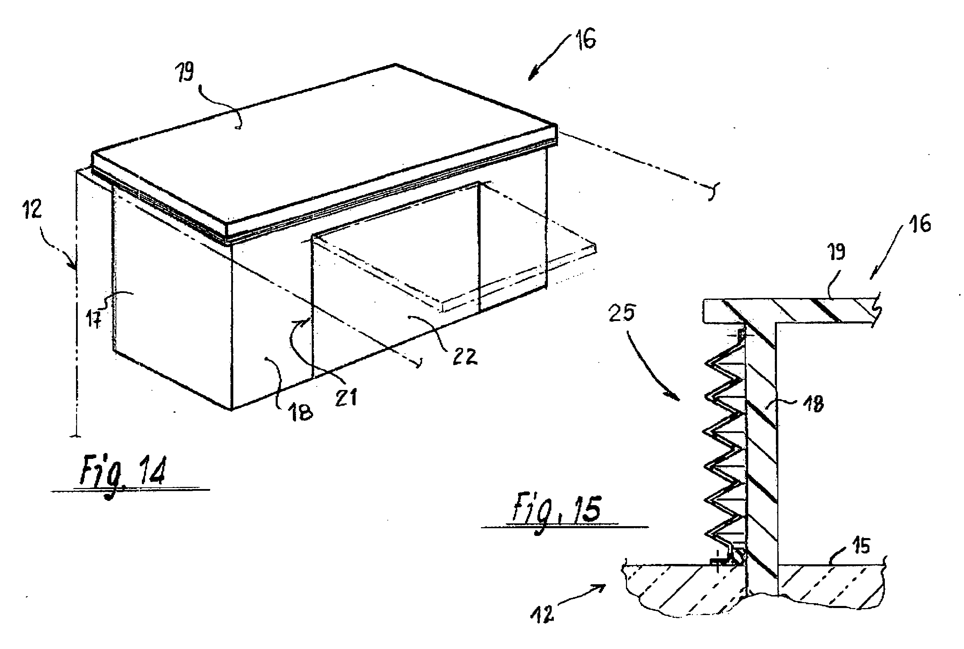

Said dome 16 (fig. 14) is shaped as an opened box in the lower surface with two smaller opposite side longitudinal walls 17 and with two larger opposite side transversal walls 18 and an higher plane roof 19 that is extended over the said walls. The height of said walls 17, 18 is e.g., less than the half of the height of the side walls of the bodywork 12.

Said walls 17,18 and roof 19 are provided according to the construction of recreational vehicles.

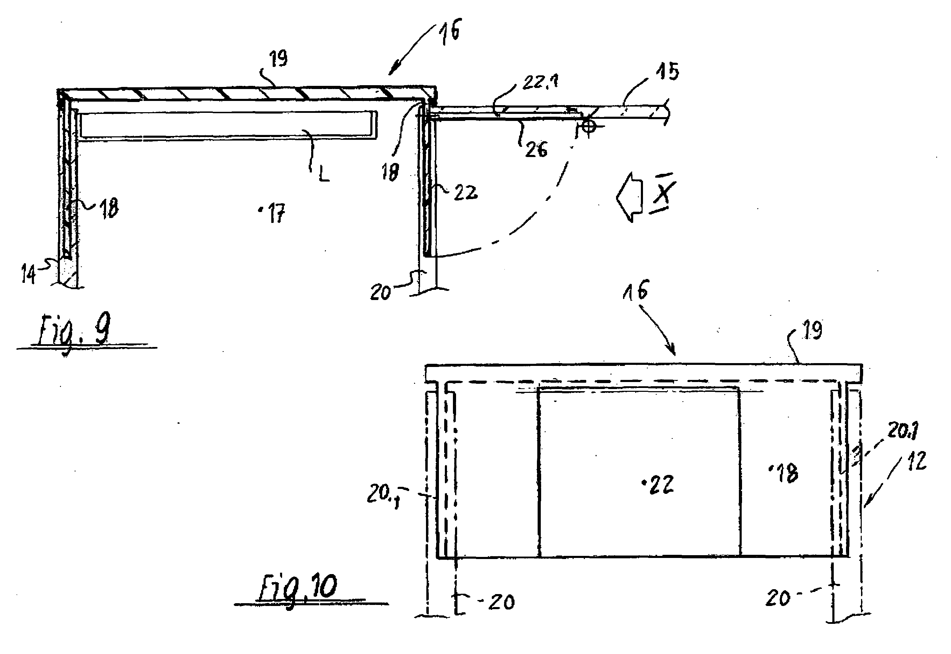

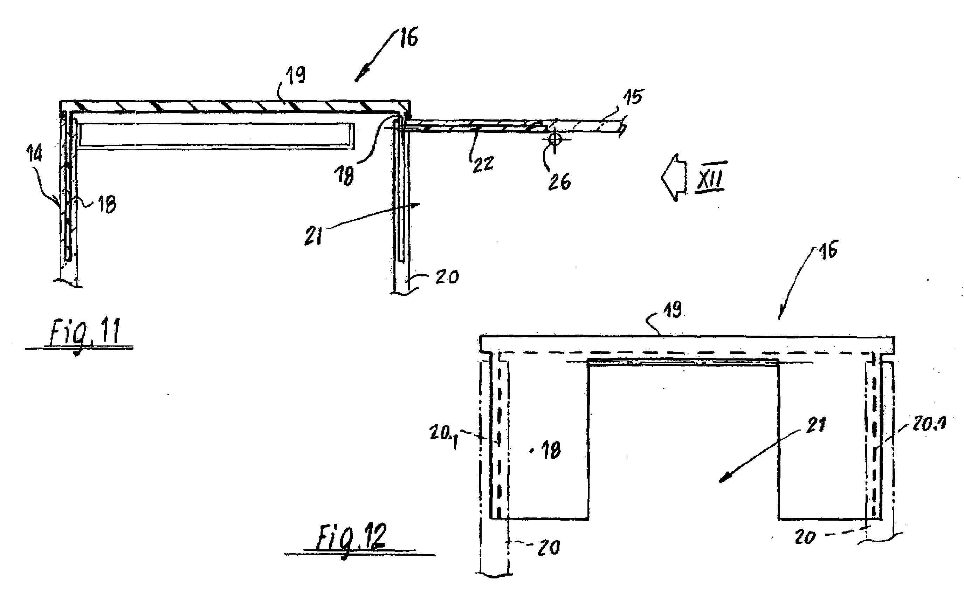

The said dome 16 is mounted and driven in a vertical motion through a sliding connection of three of its side walls (two longitudinal walls 17 and the transversal rear wall 18) inside corresponding free interspaces provided in the side walls 14 of the bodywork 12 of the vehicle, while a fourth side wall (the transversal front wall 18) is connected through a sliding connection in corresponding vertical grooves 20.1 provided in two inner uprights 20 of the bodywork 12 (figures 10, 12).

The transversal front wall 18 presents a rectangular wide opening 21 that extends from the base to the proximity of the roof 19, that can be selectively closed through a door 22, floating around an horizontal axis near to the roof.

The longitudinal side walls 17 of the dome 16 are partially extended each through two lower flat shanks 17.1, which are integral with the walls or provided with plates fixed to the walls, spaced each other and extended near to the floor of the bodywork 12. These flat shanks 17.1 are sliding inside corresponding free interspaces provided in the side walls 14 of the bodywork 12. To simplify the representation these shanks 17.1 are not present in fig. 14.

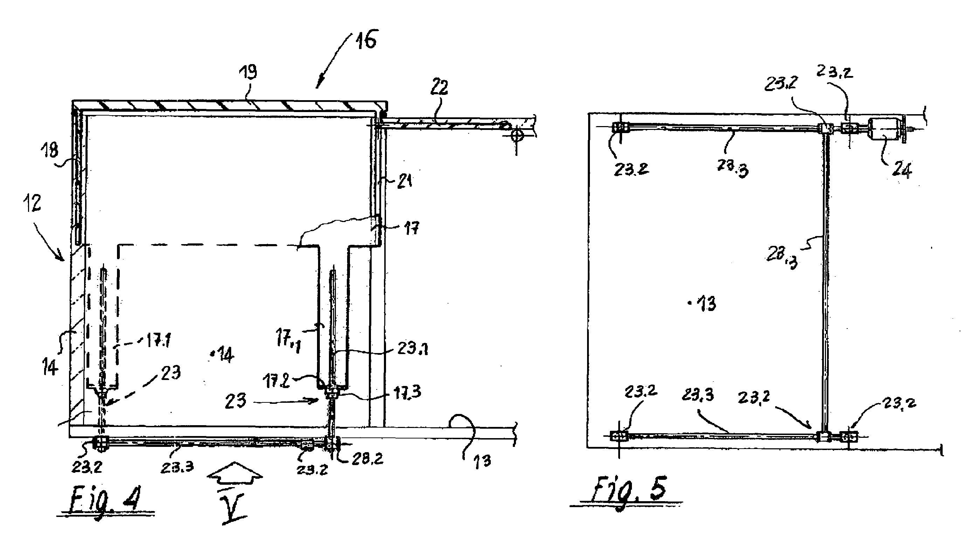

Each flat shank 17.1 comprises at its lower end, a fixed horizontal bored bracket 17.2 (fig. 4), to which is coupled a threaded nut 17.3 with vertical axis. Each nut 17.3 helicoidally engages a corresponding worm screw jack 23.1 having substantially vertical axis, realizing a respective mechanical rotating screw jack with travelling nut 23 (fig. 4).

The worm screw 23.1 of each screw jack 23 passes through the floor 13 of the bodywork 12 and, under the floor, the said screw jacks are connected one another cinematically through respective right angle gearboxes 23.2 and three relative horizontal shafts 23.3 that provide corresponding torsion bars, as cardan joints (fig. 5). One of these screw jacks 23 is connected cinematically to an electrical reversible motor gearbox 24, fixed under the floor 13 and that, rotating in both verse, make all the four screws 23.1 of the screw jacks 23 to rotate at the same time, generating the synchronized translation movement, vertical and in the same direction, up or down, of the respective nuts 17.3.

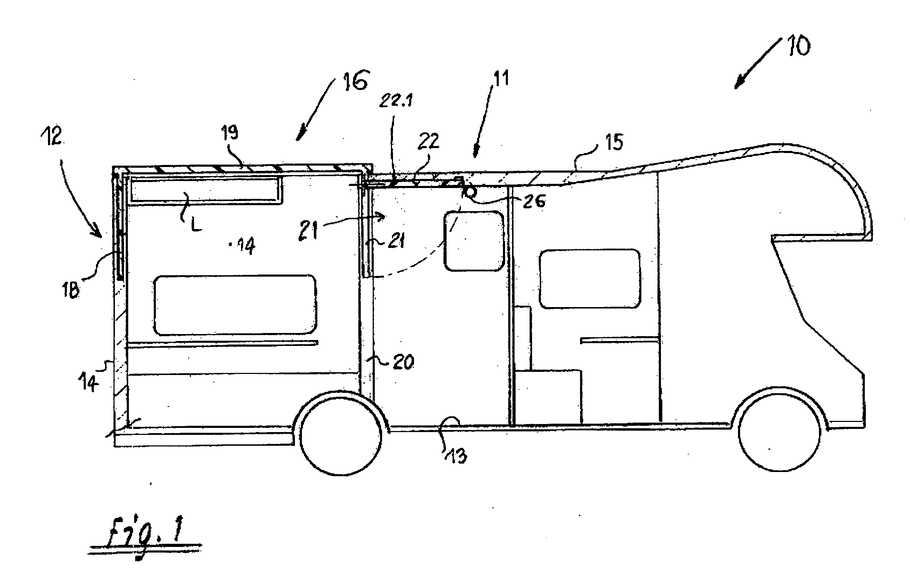

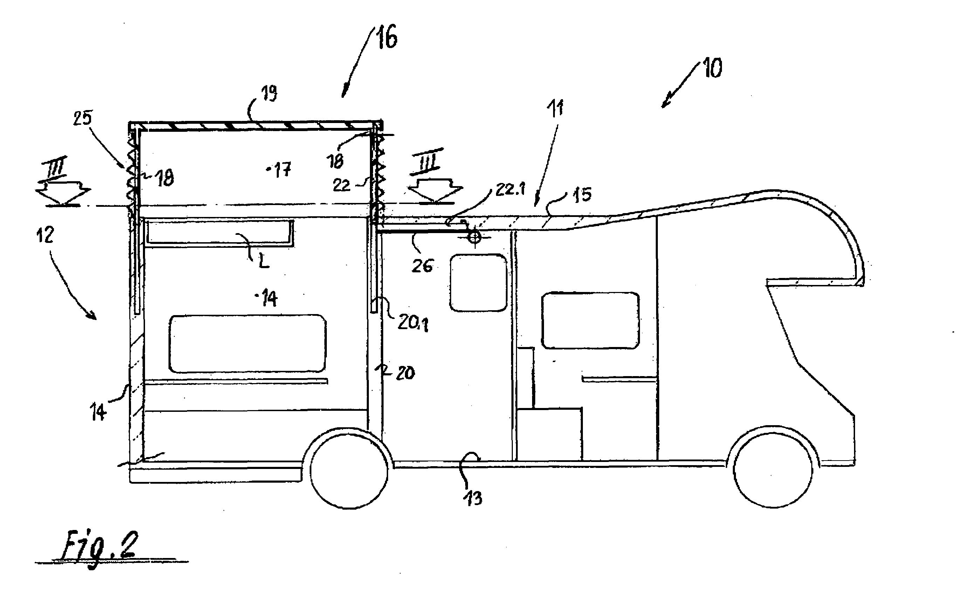

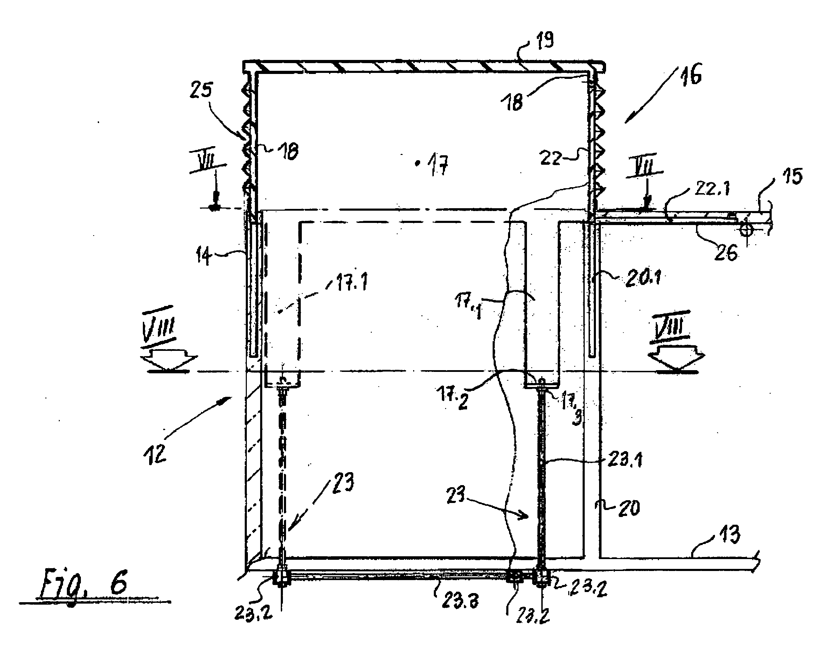

Since these nuts 17.3 are connected, as described above, to the dome 16, this one moves vertically along with the said nuts, between a lower position (figures 1,4,9,10,11,12), in which the dome 16 is substantially inside the silhouette of the vehicle 10 for purposes of road circulation, and the said lifted up position (figures 2,6,13), in which the dome 16 provides an increasing of the inner space of the house cell 11. Some limit stop, well-known and not described in this document, are arranged to stop automatically the electrical motor gearbox 24 rotation, when the lower or higher end positions of the dome 16 is reached. This motor gearbox 24 is electrically connected, in a well-know way thus not described, to the main electric circuit of the vehicle 10 and to respective controls means (for example switches) for the movement of the system.

In order to let the dome 16 going down in case of lack of current or in case of failures of the motor gearbox 24, an hand drive (well known and not described in this document) for the manual rotation of the screws 23.1 of the screw jacks 23 is provided.

A bellow 25 (figures 2, 15) for the waterproof protection made in flexible plastic or textile, is fixed between the outer perimeter of the roof 19 of the dome 16 and the zone of the roof 15 of the bodywork 12 next to the dome, in order to guarantee the water proof protection and the thermal insulation of the house cell 11 near the dome 16.

As illustrated in the drawings, when the dome 16 is lifted up, the door 22 is always rotated in vertical position in order to close the opening 21. While, when the dome 16 is in the lower position, this door 22 can be rotated selectively in two different positions:
- a vertical position (figures 9,10) for the closing of opening 21, in order to create a partial division of the inner space of the house cell 11, separating the upper zone of the "dinette" from the rest of the room;
- a horizontal position towards the outside of the dome 16, that is an opening position (figures 1,4,11,12), in order to allow the upper zone of the "dinette" to communicate with the rest of the room inside the house cell 11.

In this horizontal position, the door 22 is hidden inside an interspace 22.1, provided in the inner surface of the roof 15 of the bodywork 12. An automatic horizontal curtain shutter 26 is provided in this inner surface of the roof 15 to hide the door 22 and the interspace, when the door is closing the opening 21.

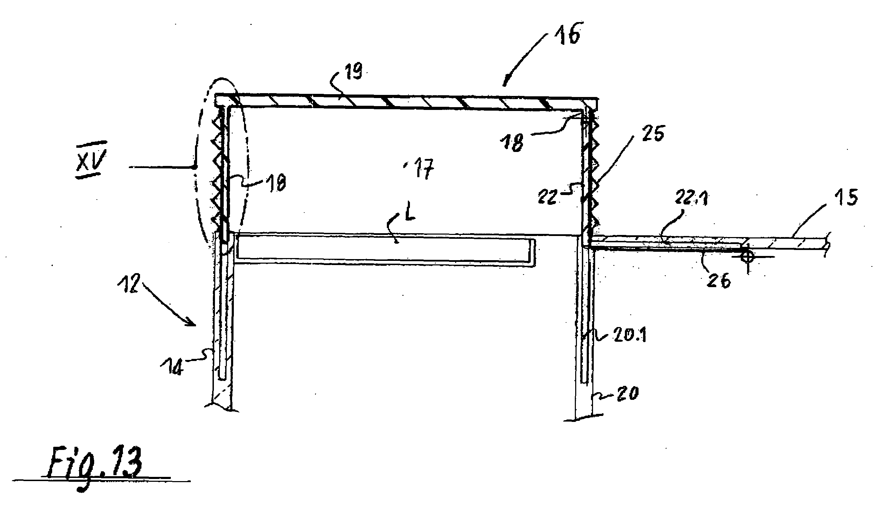

As illustrated in the drawing, in the higher part of the transversal rear wall 18 is fixed an overhanging bed L inside the bodywork 12, well supported, the access and use of which is easy when the dome 16 is lifted up (figures 2,13), while when the dome 16 is in the lower position it does not represent a great hindrance for the occupants of the house cell 11.

As described above, the vertically moving dome 16, when lifted up (when the vehicle is in parking), provides in the rear zone of the house cell 11 of the vehicle 10 a room like a mansard, set for bedroom This configuration allows both to increase, according to the user will, during the parking, the volume of the house cell, and also to have, when it needs, some more beds inside the house cell, using simple and efficient means. Moreover, the inner space of the house cell is protected by the dome, that is insulated and water proof as the rest of the same house cell, so the comfort is ensured.

The water proof protection of the moving dome could be provided with sheets of elastic material instead of bellow.

On the other side, the control and driving means for the vertical translation of the dome can be different, besides mechanicals, hydraulics as well or pneumatics or similar.

Moreover, the shape, the dimensions, the materials and the arrangement of the moving dome could change in relation to how described and illustrated in the example above.

## Claims

1. Recreational vehicle (10) with variable volume house cell (11), including a bodywork (12), **characterized by** a dome (16) that can move vertically with reference to the bodywork (12) between a lower position, in which said dome (16) is substantially inside the overall dimensions of the vehicle (10) for purposes of road circulation, and a lifted up position, in which the dome itself creates an increased inner volume of the house cell (11) of the vehicle, so that said dome (16), when lifted up, provides a room like a mansard inside the house cell (11).

2. Recreational vehicle according to claim 1, **characterized in that** said dome (16) has substantially the shape of a box open at the bottom and with two opposite substantially longitudinal side walls (17) and two substantially transversal opposite walls (18) and a roof (19).

3. Recreational vehicle according to claim 1 and/or 2, **characterized in that** said dome (16) is mounted and driven in a vertical motion through a sliding connection of three of its side walls (17, 18) inside corresponding free interspaces provided in the side walls (14) of the bodywork (12) of the vehicle, while a fourth side wall (18) of said dome is connected through a sliding connection in corresponding vertical grooves (20.1) provided in inner structures (20) of the bodywork (12).

4. Recreational vehicle according to one or more of the preceding claims, **characterized in that** said dome (16) is connected to translation means (17.3, 23, 23.1, 23.2, 23.3, 24) controlling its selective motion in the vertical direction.

5. Recreational vehicle according to claim 4, **characterized in that** said translation means comprise mechanical rotating screw jacks with travelling nut (23) with respective worm screws (23.1) having substantially vertical axis and cinematically connected at one end to said dome (16) and, at the other end, one another (23.2, 23.3) and to an electrical reversible motor gearbox (24), that, rotating in both verse, make all the screws (23.1) of the screw jacks (23) to rotate at the same time, generating the synchronized translation movement, vertical and in the same direction, up or down, of the respective nuts (17.3) and then of the dome (16), that moves vertically along with the said nuts.

6. Recreational vehicle according to one or more of the preceding claims, **characterized in that** limit stop means are arranged to automatically stop the translation of the said dome (16), when it reaches the high or low position.

7. Recreational vehicle according to one or more of the preceding claims**, characterized in that** at least some side walls (17) of the dome (16) comprise shanks (17.1) spaced each other and extend near to the floor (13) of the bodywork (12); said shanks are sliding inside corresponding free interspaces provided in the side walls (14) of the bodywork and are connected, at their lower end, with a respective nut (17.3) that helicoidally engages a corresponding worm screw (23.1), having substantially vertical axis.

8. Recreational vehicle according to the previous claim, **characterized in that** the worm screw (23.1) of each screw jack (23) passes through the floor (13) of the bodywork (12) and, under the floor, the said screw jacks are connected one another cinematically through respective right angle gearboxes (23.2) and relative horizontal shafts (23.3) that provide corresponding torsion bars, as cardan joints, while one of these screw jacks (23) is connected cinematically to an electrical reversible motor gearbox (24), fixed under the floor (13).

9. Recreational vehicle according to one or more of the preceding claims, **characterized in that** the front wall (18) of the dome (16) has an opening (21) that can be selectively closed by a corresponding door (22), which can be swung around an horizontal axis to open, when the dome is in the lower position, while said opening (21) is always closed by the same door (22) when the dome (16) is lifted up.

10. Recreational vehicle according to the previous claim above, **characterized in that** said door (22) is hidden inside an interspace (22.1), provided in the inner surface of the roof (15) of the bodywork (12), when it is out of work and the opening (21) is free.

11. Recreational vehicle according to the previous claim, **characterized in that** it comprises a curtain shutter (26) used to hide the door (22), when the same is arranged inside the interspace (22.1), or to hide the said interspace, when the said door is closing the opening (21).
